# EUROPÄISCHE PATENTSCHRIFT

(11) **EP 3 270 183 B1**
(45) Veröffentlichungstag und Bekanntmachung des Hinweises auf die Patenterteilung: **27.03.2019**
(21) Anmeldenummer: 16179683.4
(22) Anmeldetag: 15.07.2016
(51) Int. Cl.: G01S 17/89, G01S 7/491, G01S 7/493, G01J 1/42

(54) **VORRICHTUNG ZUR UMGEBUNGSLICHTKOMPENSATION FÜR EINEN NUTZ- UND UMGEBUNGSLICHT AUSGESETZTEN OPTISCHEN SENSOR**
AMBIENT LIGHT COMPENSATION DEVICE FOR OPTICAL SENSORS EXPOSED TO USEFUL LIGHT AND AMBIENT LIGHT
DISPOSITIF DE COMPENSATION DE LA LUMIERE AMBIANTE POUR UN CAPTEUR OPTIQUE SOUMIS A LA LUMIERE AMBIANTE ET UTILE

(43) Veröffentlichungstag der Anmeldung: 17.01.2018
(73) Patentinhaber: ELMOS Semiconductor Aktiengesellschaft, 44227 Dortmund (DE)
(72) Erfinder: Budde, Wolfram, 44227 Dortmund (DE)
(74) Vertreter: dompatent von Kreisler Selting Werner - Partnerschaft von Patent- und Rechtsanwälten mbB

(56) Entgegenhaltungen:
- EP-A1- 2 546 620
- WO-A1-2004/027357
- DE-A1-102014 215 972
- DE-B3-102011 076 635
- US-A- 5 545 891
- CHO JIHYUN ET AL: "A 3-D Camera With Adaptable Background Light Suppression Using Pixel-Binning and Super-Resolution", IEEE JOURNAL OF SOLID-STATE CIRCUITS, IEEE SERVICE CENTER, PISCATAWAY, NJ, USA, Bd. 49, Nr. 10, 1. Oktober 2014 (2014-10-01), Seiten 2319-2332, XP011559752, ISSN: 0018-9200, DOI: 10.1109/JSSC.2014.2340377 [gefunden am 2014-09-22]

## Beschreibung

Die Erfindung betrifft eine Vorrichtung zur Umgebungslichtkompensation für einen optischen Sensor, der einerseits ausschließlich Umgebungslicht und andererseits Umgebungslicht und Nutzlicht ausgesetzt ist.

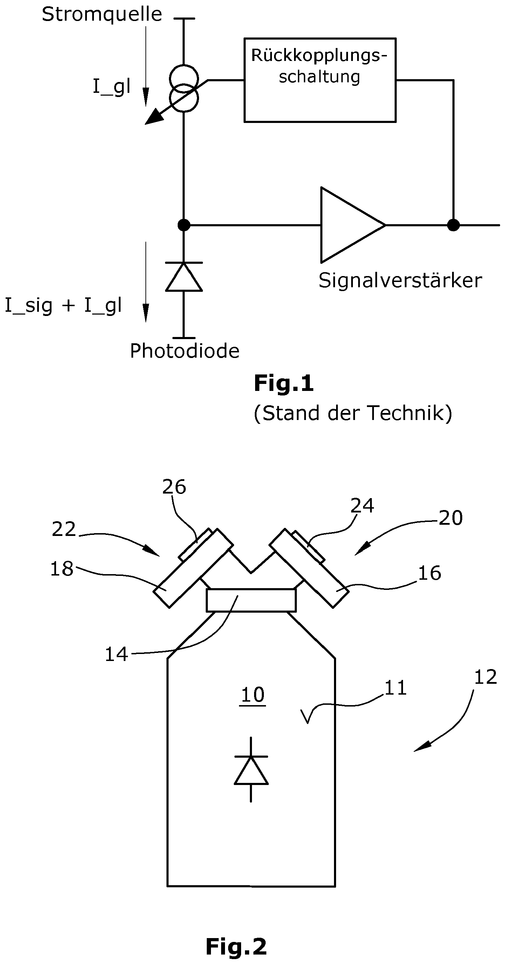

Für optische Sensoren, die mit moduliertem oder gepulsten Nutzlicht arbeiten, gehört zu den Kernfunktionen einer funktionsfähigen Applikation eine möglichst gute Kompensation des (als kontinuierliches Licht angenommenen) Umgebungslichts. Bisher vielfach eingesetzte bekannte Verfahren arbeiten nach dem in Fig. 1 gezeigten Prinzip.

Dabei wird der Strom der Fotodiode, der sich aus einem Signallichtanteil I_sig und einem Umgebungslichtanteil I_gl zusammensetzt, verstärkt und durch eine geeignete Filter- und Kompensationsschaltung auf eine Stromquelle (oder einen Widerstand) geführt, so dass nur der Signallichtanteil I_sig übrigbleibt und der Umgebungslichtanteil I_gl unterdrückt wird. Dabei kann das Umgebungslicht auch Wechselkomponenten (z.B. von Leuchtstofflampen) enthalten, die auch mit geeigneten Filtern beseitigt werden.

Der Nachteil dieses Konzepts ist darin zu sehen, dass die Umgebungslichtkompensation hinter dem Signalverstärker ansetzt, und damit Signalverstärker und Umgebungslichtkompensation nicht mehr unabhängig voneinander dimensioniert werden können.

In EP-B-2 546 620 ist eine Vorrichtung zur Umgebungslichtkompensation von optischen Sensoren beschrieben, die zu einer Verbesserung der Umgebungslichtkompensation gegenüber der anhand von Fig. 1 zuvor beschriebenen Vorgehensweise führt.

Optische Sensoren auf Basis von CMOS-Technologien erfreuen sich bereits seit geraumer Zeit zunehmender Beliebtheit. Dies gilt insbesondere für "Kameraauf-einem-Chip"-Ansätze, wie sie in Digitalfotoapparaten, Digitalkameras, insbesondere im Automotive-Bereich und bei mobilen Endgeräten zum Einsatz kommen. Auch für 3D-Abbildungsanwendngen werden derartige Ansätze verfolgt, wobei diesbezüglich sogenannte Flugzeit-(ToF-Time of Flight)-Kameras eingesetzt werden. Derartige ToF-Anwendungen setzen CMOS-Sensoren voraus, die mit extrem schnell ansprechenden Pixeln versehen sind. Beispiele für optische Sensoren, wie sie als Pixel beispielsweise in CMOS-Sensoren von ToF-3D-Abbildungsanwendungen eingesetzt und mitunter als Pinned-Fotodioden bezeichnet werden, sind in DE-B-10 2009 020 218, DE-B-10 2011 076 635 und in Andreas Spiekermann, Werner Brockherde und Jochen Noell, "Neuartige CMOS-Fotodetektoren für die schnelle Flugzeit-Sensorik", in Photonik 3/2012, Seiten 42 bis 45, beschrieben.

Eine Vorrichtung zur Umgebungslichtkompensation für einen Nutz- und Umgebungslicht ausgesetzten optischen Sensor ist darüber hinaus auch aus DE-A-10 2014 215 972 bekannt, von der der Oberbegriff des Anspruchs 1 ausgeht.

Aufgabe der Erfindung ist die Verbesserung der Umgebungslichtkompensation bei optischen Sensoren, die insbesondere als sogenannte Pinned-Fotodioden ausgebildet sind.

Zur Lösung dieser Aufgabe wird mit der Erfindung eine Vorrichtung zur Umgebungslichtkompensation für einen gleichermaßen Nutz- und Umgebungslicht ausgesetzten optischen Sensor vorgeschlagen, wobei die Vorrichtung versehen ist mit den Merkmalen des Anspruchs 1. Einzelne Ausgestaltungen der Erfindung sind Gegenstand der Unteransprüche.

Bei der Erfindung wird eine Pinned- oder Lateral-Driftfeld-Fotodiode (auch LDPD abgekürzt) eingesetzt, die, wie bei Fotodioden an sich üblich, einen strahlungsempfindlichen Ladungserzeugungsbereich aus einem Halbleitermaterial aufweist, in dem sich bei Belichtung freie Ladungsträger bilden. Die Fotodiode ist versehen mit einem ersten und einem zweiten Transfer-Gate zur Abführung von Ladungsträgern aus dem Ladungserzeugungsbereich zu unterschiedlichen Ausgangsanschlüssen der LDPD-Fotodiode.

Wie bereits oben erwähnt, wird die Fotodiode moduliertem Nutzlicht ausgesetzt, und zwar dergestalt, dass die Fotodiode in Belichtungsintervallen dem Nutzlicht einschließlich des Umgebungslichts ausgesetzt ist, während sie in Pausenintervallen ausschließlich dem Umgebungslicht ausgesetzt ist. Werden nun die Elektroden der beiden Transfer-Gates synchron zu den Pausen- und Belichtungsintervallen angesteuert, so liefert die Fotodiode in Pausenintervallen an einem ersten Ausgangsanschluss ein die Intensität des Umgebungslichts repräsentierendes Umgebungslichtsignal, während sie in Belichtungsintervallen an einem zweiten Ausgangsanschluss ein Umgebungslicht/Nutzlichtsignal ausgibt, das die Intensität von Nutz- und Umgebungslicht repräsentiert.

Erfindungsgemäß wird nun nach einem Pausenintervall das Umgebungslichtsignal zwischengespeichert, um es im nächsten Intervall, bei dem es sich um ein Belichtungsintervall handelt, von dem dann am zweiten Ausgangsanschluss anstehenden Umgebungslicht/Nutzlichtsignal zu subtrahieren. Das Subtraktionssignal ist dann also das umgebungslichtkompensierte Nutzsignal des optischen Sensors bzw. der Fotodiode.

Nach der Erfindung ist der Signalspeicher als Stromspiegel ausgeführt, der zwei Stromquellen aufweist, welche mittels einer Sample-and-Hold-Schaltung gekoppelt sind, wobei die eine Stromquelle mit dem ersten Ausgangsanschluss der Lateral-Driftfeld-Fotodiode verbunden ist und die andere Stromquelle über einen Subtraktions-Schalter mit dem zweiten Ausgangsanschluss verbunden ist, wobei die Ansteuereinheit den Subtraktions-Schalter in einem Pausenintervall öffnet, wenn die strahlungsempfindliche Fläche der Lateral-Driftfeld-Fotodiode ausschließlich Umgebungslicht ausgesetzt ist, und in einem Belichtungsintervall schließt, wenn die strahlungsempfindliche Fläche der Lateral-Driftfeld-Fotodiode dem Nutzlicht und dem Umgebungslicht ausgesetzt ist.

Mit der Erfindung wird also eine Umgebungslichtkompensation bei einem optischen Sensor vorgeschlagen, wobei dieser als sogenannte Pinned-Fotodiode und insbesondere als Lateral-Driftfeld-Fotodiode (LDPD) ausgeführt ist. Dieser Fotodioden-Typ verfügt über einen speziellen Lateral-Dotierstoffkonzentrationsgradienten innerhalb des typischerweise als Wanne in einem Halbleitersubstrat ausgebildeten Ladungserzeugungsbereich. Durch die lateral ansteigende Dotierstoffkonzentration des Ladungserzeugungsbereichs wird für die freien Ladungsträger ein Driftfeld erzeugt, das die Ladungsträger in Richtung höherer Dotierstoffkonzentrationen beschleunigt. Dadurch kann bereits ohne Anlegen von externen elektrischen Potentialen eine Bewegung der freien Ladungsträger in eine gewünschte Richtung, nämlich zu den Transfer-Gates hin, hervorgerufen werden. Diese Bewegung kann durch Anlegen externer elektrischer Potentiale noch unterstützt werden. Durch den Dotierstoffkonzentrationsgradienten in dem Ladungserzeugungsbereich kann ein Driftfeld erzeugt werden, das beispielsweise auch bei Detektoren mit großen Detektionsbereichen Ladungen im gesamten Detektionsbereich beschleunigen kann. Dadurch ist der Ladungsträgertransport einer derartigen Fotodiode nicht nur auf thermische Diffusion beschränkt und kann dadurch wesentlich schneller erfolgen. Die Ansprechgeschwindigkeit der Fotodiode kann dadurch deutlich erhöht werden und/oder die Ansprechzeiten deutlich verringert werden (siehe auch DE-B-10 2009 020 218, Abs. [0016] sowie DE-B-10 2011 076 635 und den oben genannten Artikel aus Photonik 3/2012).

Neben dem Licht der aktiven Nutzlichtquelle ist der optische Sensor naturgemäß auch für das Umgebungslicht empfindlich. Bei schwachen aktiven Nutzlichtsignalen (beispielsweise weit entferntes Objekt, schwache Sendeleistung) kann das Umgebungslicht gegenüber dem Licht der aktiven Nutzlichtquelle dominieren und damit die Entfernungsmessung erschweren oder sogar unmöglich machen. Daher wird in in der Praxis eingesetzten Systemen das Umgebungslicht durch ein optisches Bandpassfilter, welches auf die Wellenlänge der aktiven Nutzlichtquelle abgestimmt ist, soweit wie möglich gedämpft. Das Bandpassfilter ist ein nicht zu verachtender Kostenpunkt, wobei trotz Filter noch ein signifikanter Anteil des Umgebungslichts verbleibt.

Das erfindungsgemäße Kompensationsverfahren kann mit einer Umgebungslichtfilterung der zuvor beschriebenen Art kombiniert werden. Eine derartige Filterung von Umgebungslicht mittels spezieller optischer Filter, die das Umgebungslicht jedoch lediglich dämpfen, ist grundsätzlich bekannt. Dieser "passive" Ansatz der Umgebungslichtdämpfung kann also mit dem erfindungsgemäßen "aktiven" Ansatz der Umgebungslichtkompensation kombiniert werden.

Die Erfindung ermöglicht die aktive Beseitigung der Einflüsse des Umgebungslichts direkt im optischen Sensor. Dies verbessert den Dynamikbereich eines das erfindungsgemäße Konzept nutzenden optischen Messsystems deutlich gegenüber z.B. einer digitalen Kompensation, bei der beispielsweise das Umgebungslicht mit einer zweiten Messung erfasst und anschließend subtrahiert wird. Gemäß einer Variante der Erfindung sind deren Hauptkomponenten:
- eine Schaltung, um Strom zu erfassen und zu kopieren, d.h. zu speichern,
- einen Schalter oder ein geeignetes Filter, um den vom Umgebungslicht verursachten Fotostrom abzutasten und zu filtern, und
- ein synchroner Schalter (Kompensationsschalter), um den das Umgebungslicht repräsentierenden, kopierten Strom zwecks Kompensation zeitrichtig zu demjenigen Fotostrom einzuspeisen, der sich einstellt, wenn zusätzlich zum Umgebungslicht auch das Nutzlicht aktiviert ist.

Die Erfindung lässt sich insbesondere auf den Gebieten der optischen Messtechnik und der optischen Sensorik einsetzen. Ein bevorzugter Anwendungsbereich der Erfindung ist in der Umgebungslichtkompensation bei ToF-Pixeln zu sehen. Insbesondere bei Messverfahren, bei denen eine aktive Nutzlichtquelle verwendet wird, ist das Umgebungslicht stets ein störender Faktor. Dieser störende Faktor wird erfindungsgemäß beseitigt, und zwar "elektronisch". Im Regelfall kann dadurch auch auf den Einsatz eines optischen Umgebungslichtdämpfungsfilters verzichtet werden. Durch die erfindungsgemäße Umgebungslichtkompensation wird in jedem Fall eine Verbesserung des Dynamikbereichs des optischen Sensors erreicht. Das wiederum führt beim Einsatz der Erfindung in Flugzeit-(ToF-)Anwendungen, die insbesondere für Entfernungsinformationen eingesetzt werden, zu einer Verbesserung dieser Information. Auf 3D-Abbildungsanwendungen bezogen, liegt also die Erfindung in mehrfacher Hinsicht verbesserte Ergebnisse.
In zweckmäßiger Weiterführung der Erfindung kann vorgesehen sein, dass das Subtraktionssignal einer Ausleseschaltung zugeführt wird und eine Auswerteschaltung nachgeordnet ist.
Ferner kann es von Vorteil sein, wenn die Sample-and-Hold-Schaltung einen Speicherschalter und eine Speicherkapazität aufweist und dass die Ansteuereinheit den Speicherschalter in einem Pausenintervall zum Aufladen mit einer das Umgebungslicht repräsentierenden Ladung schließt und in einem Belichtungsintervall zum Erzeugen des das Umgebungslicht repräsentierende Umgebungslichtsignals öffnet.
Von Vorteil kann es ferner sein, wenn die beiden Stromquellen jeweils von einem PMOS-Transistor gebildet sind.
Zur Verringerung des Platzbedarfs für den Signalspeicher ist es von Vorteil, wenn die Speicherkapazität von dem PMOS-Transistor der mit dem zweiten Ausgangsanschluss der Lateral-Driftfeld-Fotodiode verbundenen Stromquelle gebildet ist.

Schließlich kann es zweckmäßig sein, wenn der Signalspeicher von einem PMOS-Transistor mit Speicherkapazität gebildet ist, wobei der PMOS-Transistor von der Ansteuereinheit in einem Pausenintervall als Diode zum Aufladen der Speicherkapazität durch das Umgebungslicht repräsentierende Ladung und in einem Belichtungsintervall als Stromquelle zur Lieferung eines die Ladung der Speicherkapazität repräsentierenden Signals ansteuerbar ist.
Die Erfindung wurde vorstehend anhand einer Ausgestaltung der Lateral-Driftfeld-Fotodiode beschrieben, die zwei Ausgangsanschlüsse aufweist, welche gegebenenfalls physikalisch voneinander getrennt sind. Beispielsweise kann die Fotodiode auch lediglich ein einziges physikalisches Transfer-Gate aufweisen und demzufolge auch einen einzigen physikalischen Ausgangsanschluss, wobei an diesem Ausgangsanschluss dann wechselweise Signale anstehen, die einerseits das Umgebungslicht und andererseits die Kombination aus Nutz- und Umgebungslicht repräsentieren. Eine Speicherung des Umgebungslichtsignals erfolgt auch bei diesem Beispiel der Lateral-Driftfeld-Fotodiode.

Die Erfindung wird nachfolgend anhand mehrerer Ausführungsbeispiele und unter Bezugnahme auf die Zeichnung näher erläutert. Im Einzelnen zeigen dabei:
- Fig. 1: schematisch ein Blockschaltbild zur Darstellung eines bekannten Verfahrens zur Umgebungslichtkompensation bei optischen Sensoren,
- Fig. 2: eine vereinfachte schematische Darstellung des strahlungssensitiven Ladungserzeugungsbereichs einer Lateral-Driftfeld-Fotodiode mit zwei Transfer-Gates und dem Kollektion-Gate,

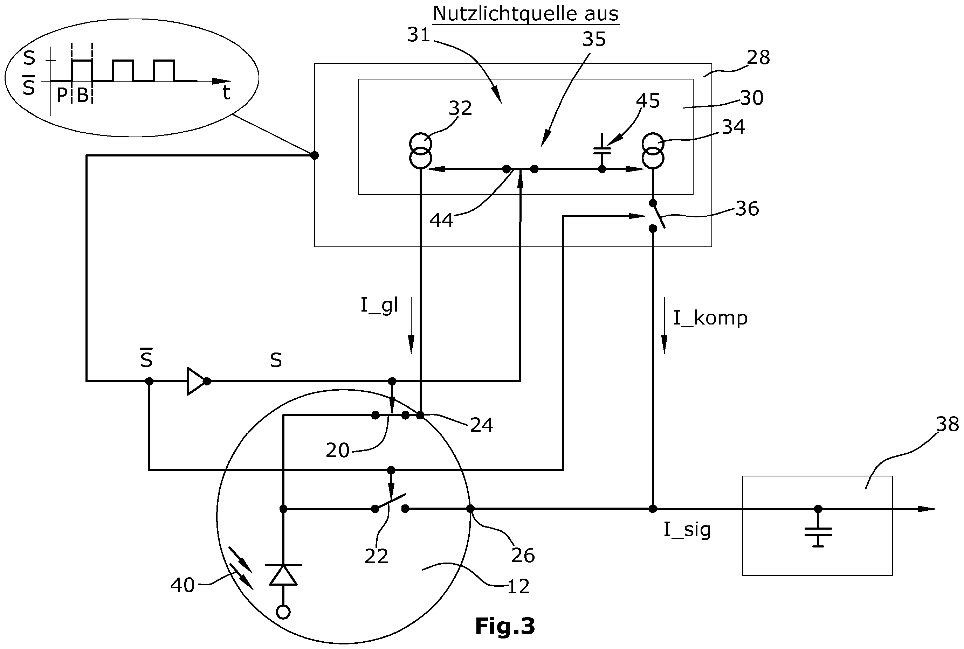

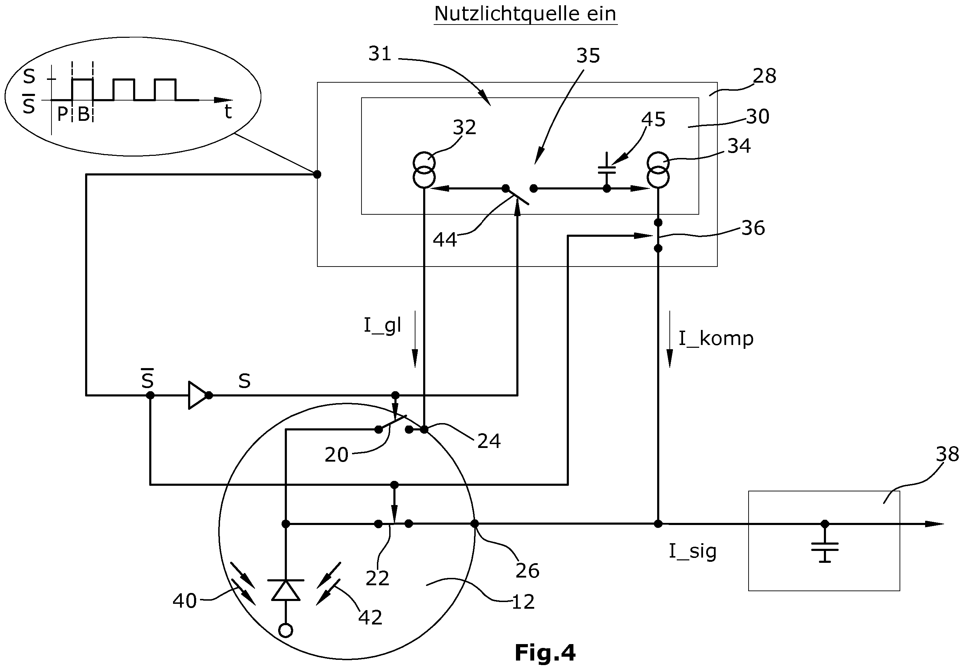

- Fign. 3 und 4: schematisch das Grundkonzept der Erfindung anhand eines ersten Ausführungsbeispiels mit den entsprechenden Schalterstellungen während eines Pausenintervalls (Fig. 3) und während eines Belichtungsintervalls (Fig. 4), wobei der Signalspeicher durch Stromquellen mit zwischengeschalteter Sample-and-Hold-Schaltung realisiert ist,

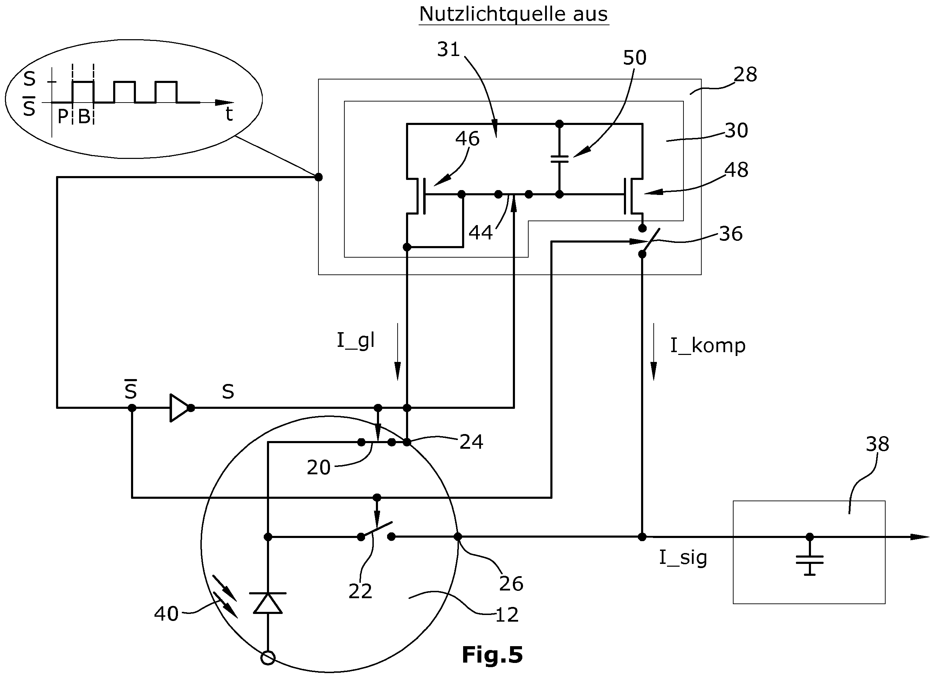

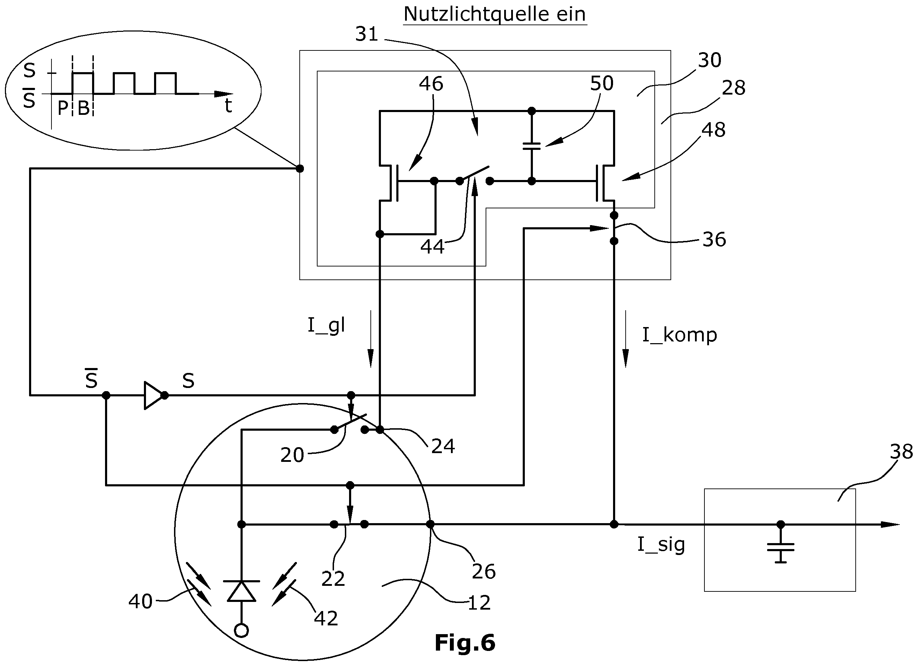

- Fign. 5 und: 6 schematisch das Grundkonzept der Erfindung anhand eines ersten Ausführungsbeispiels mit den entsprechenden Schalterstellungen während eines Pausenintervalls (Fig. 5) und während eines Belichtungsintervalls (Fig. 6), wobei der Stromspiegel durch zwei PMOS-Stromquellen realisiert ist,

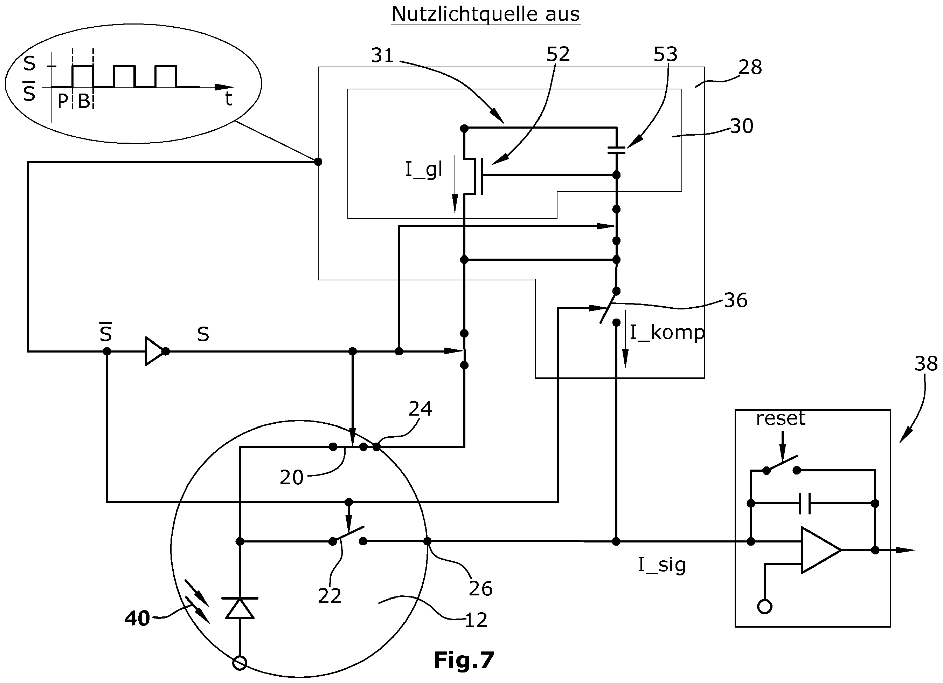

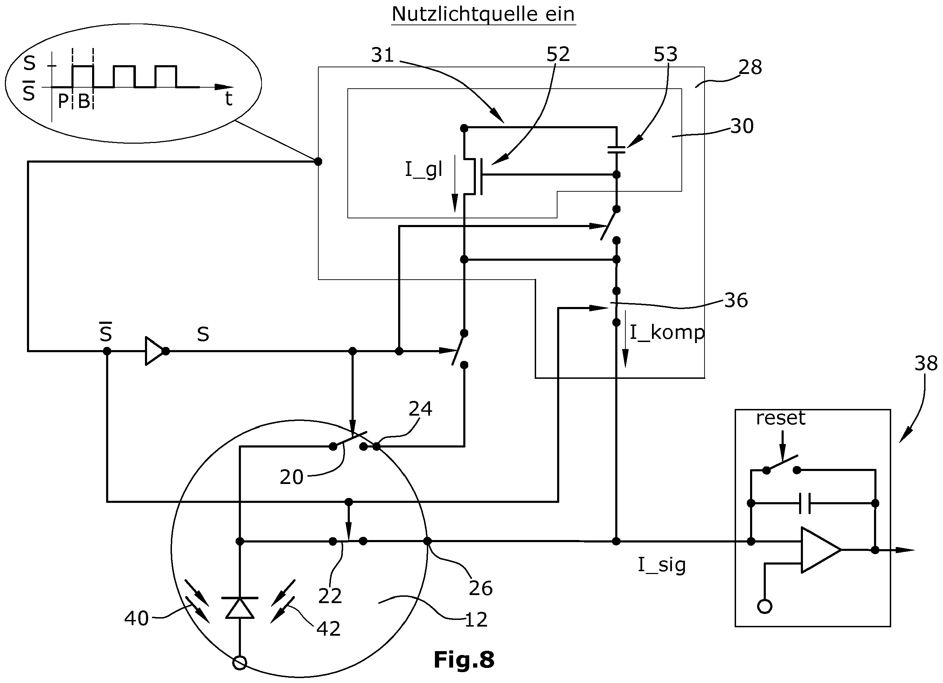

- Fign. 7 und 8: schematisch das Grundkonzept der Erfindung anhand eines ersten Ausführungsbeispiels mit den entsprechenden Schalterstellungen während eines Pausenintervalls (Fig. 7) und während eines Belichtungsintervalls (Fig. 8), wobei der Signalspeicher durch einen einzigen PMOS-Transistor mit Kapazität realisiert ist,

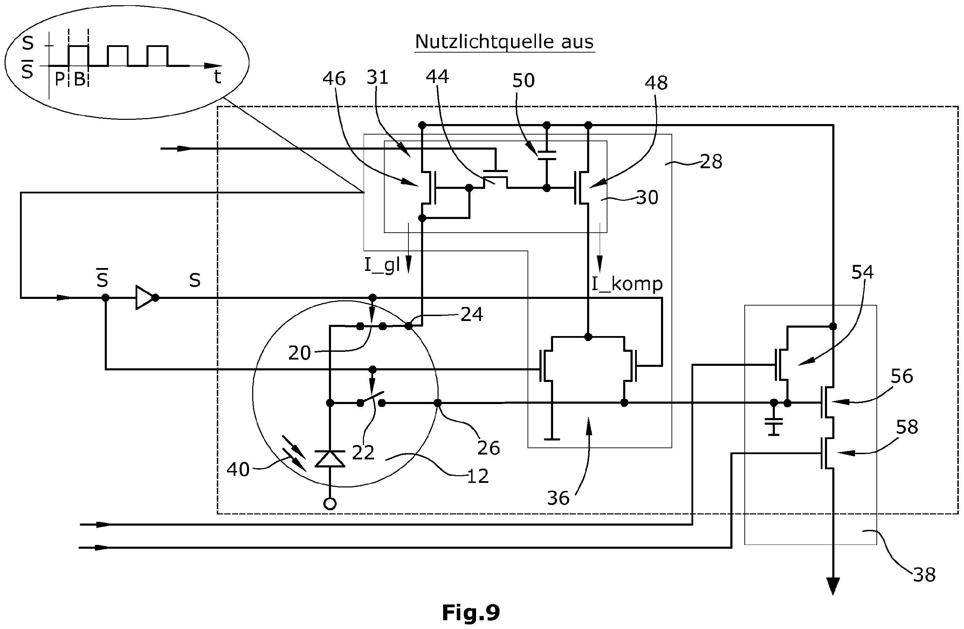

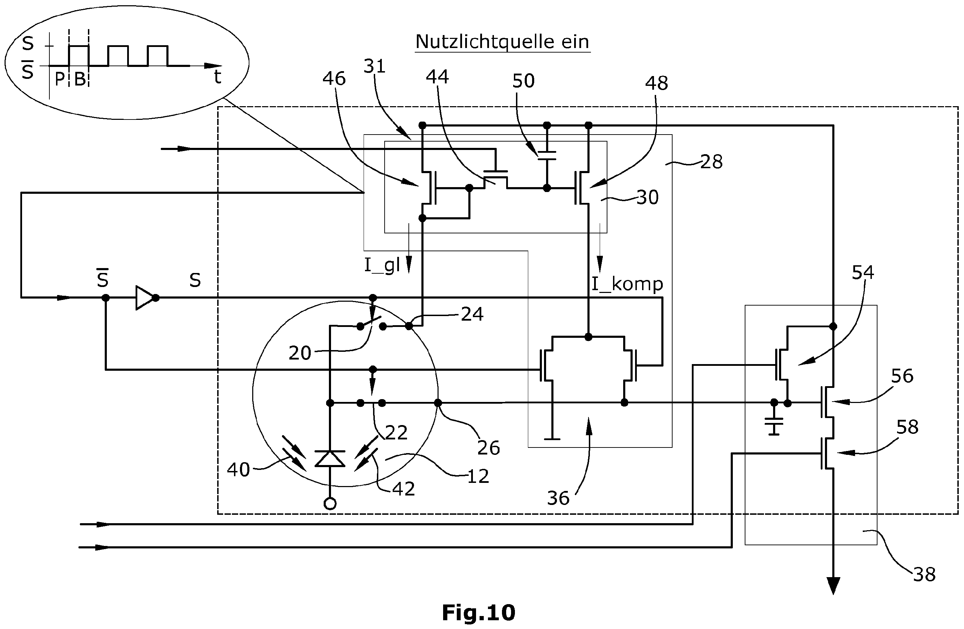

- Fign. 9 und 10: eine Schaltungsausführung, wie sie in einer ToF-Kamera Verwendung finden könnte, wobei Fig. 9 die Schalterstellungen im Pausenintervall und Fig. 10 die Schalterstellungen im Belichtungsintervall zeigen,

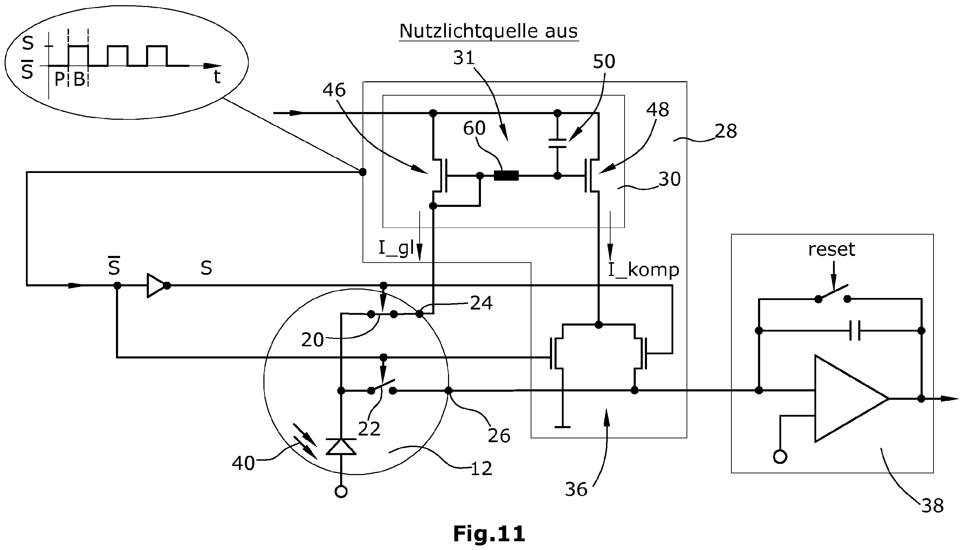

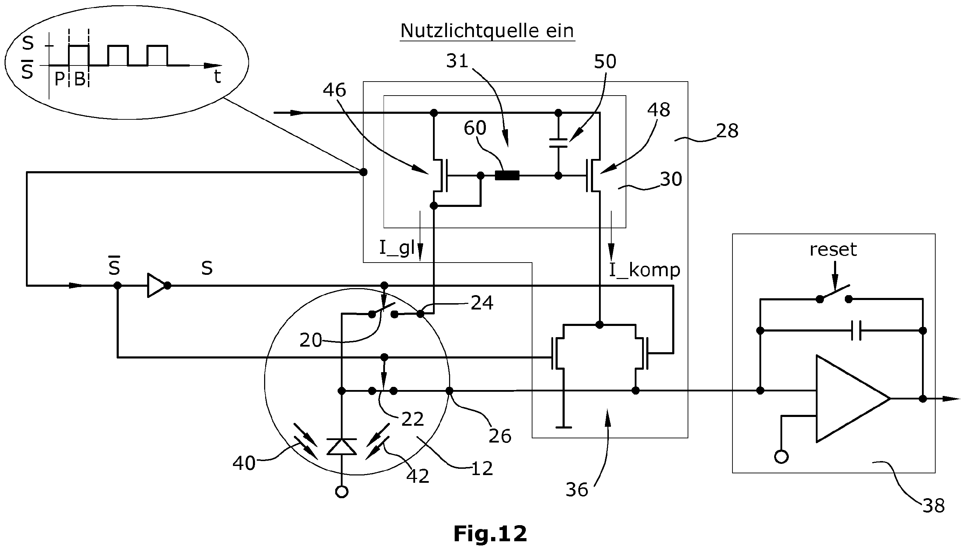

- Fign. 11 und 12: schematisch das Grundkonzept der Erfindung anhand eines ersten Ausführungsbeispiels mit den entsprechenden Schalterstellungen während eines Pausenintervalls (Fig. 11) und während eines Belichtungsintervalls (Fig. 12), wobei der Signalspeicher statt eines Speicherschalters ein Filter aufweist, und

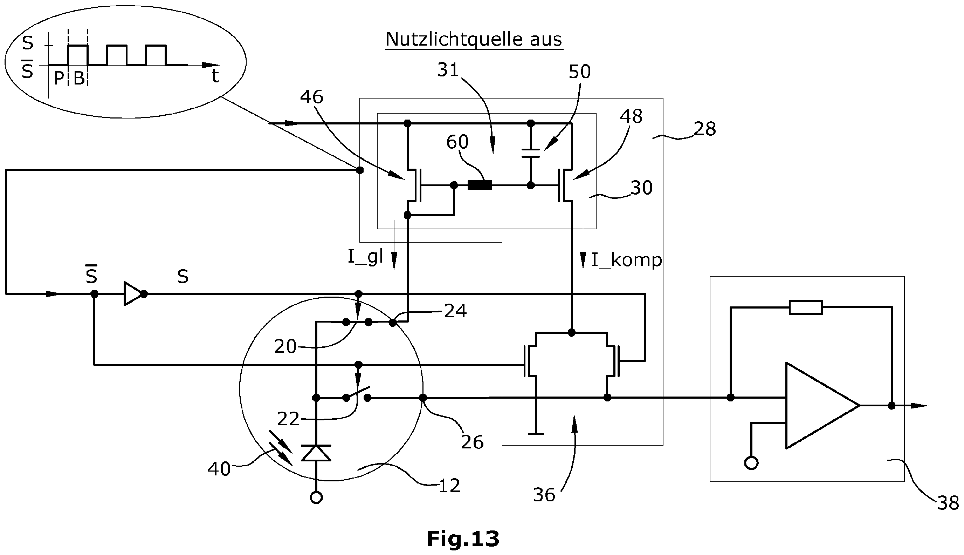

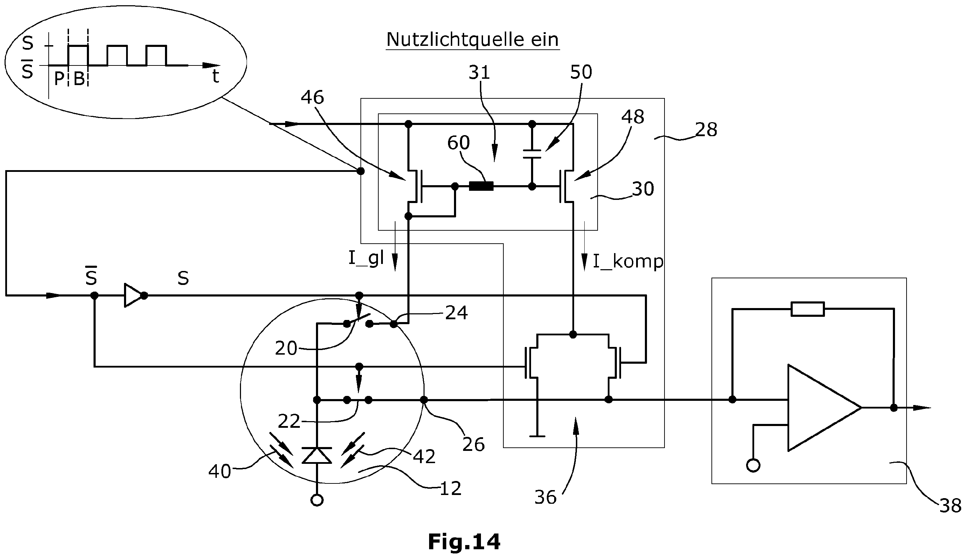

- Fign. 13 und 14: schematisch das Grundkonzept der Erfindung anhand eines ersten Ausführungsbeispiels mit den entsprechenden Schalterstellungen während eines Pausenintervalls (Fig. 13) und während eines Belichtungsintervalls (Fig. 14), wobei bei dieser Variante im Vergleich zur Variante der Fign. 11 und 12 in der Ausleseschaltung ein Transimpedanzverstärker statt eines Ladungsverstärkers angeordnet ist.

Wie bereits oben erwähnt, eignet sich das erfindungsgemäße Umgebungslichtkompensationsverfahren vornehmlich für einen Fotodetektor, der als Pinned-Fotodiode bzw. als Lateral-Driftfeld-Fotodiode ausgeführt ist, wie er beispielsweise in DE-B-10 2009 020 213, DE-B-10 2011 076 635 und in Andreas Spiekermann , Werner Brockherde und Jochen Noell, "Neuartige CMOS-Fotodetektoren für die schnelle Flugzeit-Sensorik", in Photonik 3/2012, Seiten 42 bis 45, beschrieben ist. Eine Draufsicht auf den lichtempfindlichen Ladungserzeugungsbereich 10 mit strahlungsempfindlicher Fläche 11 einer derartigen Fotodiode 12 zeigt Fig. 2. Bei Belichtung des strahlungsempfindlichen Ladungserzeugungsbereichs 10 entstehen in diesem freie Ladungsträger, die zeitlich und/oder räumlich gezielt abgeführt werden können. Hierzu dient ein bei 14 angedeutetes Kollektion-Gate, und zwar in Kombination mit der Ansteuerung der Elektroden 16,18 eines ersten Transfer-Gates 20 bzw. eines zweiten Transfer-Gates 22. Über diese Transfer-Gates 20,22 kann die Ladung zu einem ersten Ausganganschluss 24 bzw. zu einem zweiten Ausgangsanschluss 26 der Fotodiode 12 abgeführt werden. Eines der beiden Transfer-Gates 20,22 sollte stets leitend, also aktiv sein, um eine Ladungsakkumulation in dem strahlungssensitiven Ladungserzeugungsbereich 10 zu vermeiden.

Anhand der Fign. 3 und 4 wird nachfolgend das erfindungsgemäße Konzept allgemein beschrieben. In Fig. 3 ist bei 12 die Fotodiode gezeigt, wobei die beiden Transfer-Gates 20,22 als Schalter symbolisiert sind. Die beiden Transfer-Gates 20,22 werden von einer Ansteuereinheit 28 angesteuert, die ein Steuersignal erzeugt, das invertiert wird, um die Transfer-Gates 20,22 wechselweise und um auch noch weitere Schalter anzusteuern. Die Ansteuereinheit 28 umfasst ferner einen Signalspeicher 30, in dem ein am ersten Ausgangsanschluss 24 der Fotodiode 12 anstehendes Signal gespeichert wird. Bei diesem Signal handelt es sich um den Strom I_gl, der durch die Fotodiode 12 fließt, wenn diese ausschließlich Umgebungslicht ausgesetzt ist.

Der Signalspeicher 30 ist in seiner allgemeinsten Form als Stromspiegel 31 ausgeführt, der zwei Stromquellen 32,34 aufweist, zwischen denen eine Sample-and-Hold-Schaltung 35 angeordnet ist. Die erste Stromquelle 32 ist dabei mit dem ersten Ausganganschluss 24 der Fotodiode 12 gekoppelt, während die zweite Stromquelle 34 über einen Kompensations- bzw. Subtraktionsschalter 36 mit dem zweiten Ausgangsanschluss 26 der Fotodiode 12 gekoppelt ist. Der Kompensationsschalter 36 wird synchron zum zweiten Transfer-Gate 22 aktiviert und deaktiviert.

Das am zweiten Ausgangsanschluss 26 anstehende Signal wird also bei geschlossenem Kompensationsschalter 36 durch den dann von der zweiten Stromquelle 34 erzeugten Strom I_komp, der gleich dem Strom I_gl ist, korrigiert, wodurch der Strom I_sig erzeugt wird, der in einer Ausleseschaltung 38 ausgelesen bzw. weiterverarbeitet wird. Der Strom I_sig ist umgebungslichtkompensiert und repräsentiert damit das Nutzlicht. Wird die Fotodiode 12 nach dem ToF-Konzept zur Entfernungsmessung eingesetzt, so würde beispielsweise in einer der Ausleseschaltung 38 nachgeordneten Auswerteschaltung aus der Zeitdifferenz zwischen dem Beginn der Nutzlicht-Belichtung der Fotodiode 12 und der Erzeugung des Nutzlichtstrom I_sig eine Entfernungsinformation extrahiert werden können.

Die Fign. 3 und 4 zeigen die beiden unterschiedlichen Phasen, nämlich die Pausenphase P, in der die Fotodiode 12 ausschließlich dem Umgebungslicht 40 ausgesetzt ist (Fig. 3) und die Belichtungsphase B (Fig. 4), in der zum Umgebungslicht auch noch das Nutzlicht 42 hinzukommt.

Die Ansteuereinheit 28 erzeugt ein beispielsweise binäres Ansteuersignal, das zwischen den logischen Zuständen 0 und 1 wechselt. In den Pausenintervallen P ist das Ansteuersignal logisch 0 (*S̅*), während es in den Belichtungsintervallen logisch 1 (S) ist. Wenn die aktive Nutzlichtquelle ausgeschaltet ist (keine Messung), ist das mit *S̅* angesteuerte erste Transfer-Gate 20 leitend. Der durch das Umgebungslicht 40 erzeugte Fotostrom I_gl wird zu einer höheren Spannung hin abgeführt, und zwar zum Stromspiegel 31. Im Stromspiegel 31 wird der durch das Umgebungslicht erzeugte Fotostrom I_gl, falls erforderlich, gefiltert und über einen Speicherschalter 44 und/oder ein Filter 45 (z.B. Kondensator) selbst gespeichert.

Sobald die aktive Nutzlichtquelle eingeschaltet wird, wird das erste Transfer-Gate 20 gesperrt und das im vorherigen Pausenintervall P gesperrte zweite Transfer-Gate 22 leitend (siehe Fig. 4). Gleichzeitig wird der Kompensationsschalter 36 geschlossen und der Kompensationsstrom I_komp, der eine Kopie des Umgebungslicht-Fotostroms I_gl ist, wird der Ausleseschaltung zugeführt. Gleichzeitig liefert die Fotodiode 12 an ihrem zweiten Ausgangsanschluss 26 einen Fotostrom, der als Summenstrom aus dem Umgebungslicht 40 und dem Nutzlicht 42 besteht. Der Kompensationsstrom I_komp wird von diesem Summenstrom abgezogen, so dass der unerwünschte Umgebungslicht-Fotostrom I_gl beseitigt ist und somit nur der Signalstrom I_sig übrigbleibt. Da der durch das Umgebungslicht generierte Fotostrom I_gl bereits vor der Ausleseschaltung 38 beseitigt wird, erfolgt keine Einschränkung des Dynamikbereichs, was ein wesentlicher Vorteil der hier beschriebenen Erfindung ist.

Die in den Fign. 3 und 4 gezeigte prinzipielle Schaltung lässt verschiedene Realisierungen zu. Die Fign. 5 bis 8 zeigen zwei Varianten.

Dabei zeigen die Fign. 5 und 6 eine Variante mit einem Signalspeicher 30, der als Stromspiegel aus PMOS-Transistoren 46,48 und einem Speicherschalter 44 mit Speicherkapazität 50 realisiert ist. Die Speicherkapazität 50 kann auch durch die Eingangskapazität des rechts in Fign. 5 und 6 gezeigten PMOS-Transistors 48 realisiert sein.

Eine weitere Möglichkeit unter Vereinfachung des Stromspiegels 31 zeigen die Fign. 7 und 8. Der PMOS-Transistor 52(mit Kapazität 53) wird während des Pausenintervalls P als Diode und während eines Belichtungsintervalls B als Stromquelle geschaltet, womit auf diese Weise der Kompensationsstrom I_komp erzeugt wird. Der Vorteil dieser Variante liegt darin, dass Unterschiede zwischen den beiden Transistoren 46,48 des Stromspiegels 31 der Schaltung nach Fign. 5 und 6 nicht auftreten können und somit eine bessere Präzision erreicht werden kann.

Die Ausleseschaltung 38 ist in den Fign. 7 und 8 als Ladungsverstärker realisiert.

In den Fign. 9 und 10 ist eine Ausführungsführung einer Schaltung gezeigt, die beispielsweise in einer ToF-Kamera Verwendung finden kann. Die Ausleseschaltung 38 umfasst den Vorauflade-Transistor 54, den Source-Follower 56 und den Select-Transistor 58, während der Kompensationsschalter 36 als PMOS-Differenzschalter ausgeführt ist, welcher ein schnelles Umschalten sicherstellt. Anstelle des Abtast-Transistors 46 im Stromspiegel 31 kann auch ein Filter verwendet werden, wie es im Stromspiegel 31 der nachfolgend beschriebenen Fign. 11 bis 14 gezeigt ist.

In den Fign. 11 bis 14 umfasst der Stromspiegel 31 des Signalspeichers 30 ein Filter 60, das eine ähnliche Wirkung hat wie der Speicherschalter 44 der Schaltungen gemäß den Fign. 3 bis 10. Die Ausleseschaltung 38 ist als Ladungsverstärker ausgeführt.
Die Auswertung des Signalstroms I_sig ist nicht auf Ladungsverstärker oder, wie in den Fign. 3 bis 6 gezeigt, auf eine Kondensatorentladung beschränkt. Insbesondere dann, wenn eine recht hohe Anzahl von Fotodioden zusammengeschaltet werden, wie dies bei den Pixeln eines Arrays der Fall ist, kann die Auswertung auch über einen Transimpedanzverstärker erfolgen, wie dies in den Fign. 13 und 14 gezeigt ist. Die Schaltung nach den Fign. 13 und 14 ist insbesondere dann vorteilhaft, wenn die Applikation große sensitive Fotoflächen benötigt und die Kurvenform des reflektierten Lichtsignals nicht verfälscht werden soll.

### BEZUGSZEICHENLISTE

- 10: Ladungserzeugungsbereich
- 11: strahlungsempfindliche Fläche des Ladungserzeugungsbereichs
- 12: Fotodiode
- 14: Kollektion-Gate
- 16: Elektrode des ersten Transfer-Gates
- 18: Elektrode des zweiten Transfer-Gates
- 20: erstes Transfer-Gate
- 22: zweites Transfer-Gate
- 24: erster Ausgangsanschluss der Fotodiode
- 26: zweiter Ausgangsanschluss der Fotodiode
- 28: Ansteuereinheit
- 30: Signalspeicher
- 31: Stromspiegel
- 32: erste Stromquelle
- 34: zweite Stromquelle
- 35: Sample-and-Hold-Schaltung
- 36: Kompensations- bzw. Subtraktionsschalter
- 38: Ausleseschaltung
- 40: Umgebungslicht
- 42: Nutzlicht
- 44: Speicherschalter
- 45: Filter bzw. Kondensator
- 46: PMOS-Transistor
- 48: PMOS-Transistor
- 50: Eingangskapazität des PMOS-Transistors
- 52: PMOS-Transistor
- 53: Kapazität
- 54: Vorauflade-Transistor
- 56: Source-Follower
- 58: Select-Transistor
- 60: Filter

- P: Pausenintervall
- B: Belichtungsintervall

## Patentansprüche

1. Vorrichtung zur Umgebungslichtkompensation für einen gleichermaßen Nutz- und Umgebungslicht ausgesetzten optischen Sensor, mit
- einer Lateral-Driftfeld-Fotodiode (12), die eine strahlungsempfindliche Fläche (11) auf einem Dotierstoff aufweisenden Ladungserzeugungsbereich (10) eines Halbleitersubstrats aufweist, in dem sich bei Belichtung Ladungsträger bilden,
- wobei die Lateral-Driftfeld-Fotodiode (12) versehen ist mit einer ersten Transfer-Gate-Elektrode (16) zum Abführen von Ladungsträgern aus dem Ladungserzeugungsbereich (10), die aus einer Belichtung der strahlungsempfindlichen Fläche (11) durch ausschließlich Umgebungslicht resultieren, zu einem ersten Ausgangsanschluss (24) der Lateral-Driftfeld-Fotodiode (12) und mit einer zweiten Transfer-Gate-Elektrode (18) zum Abführen von Ladungsträgern aus dem Ladungserzeugungsbereich (10), die aus einer Belichtung der strahlungsempfindlichen Fläche (11) durch Nutz- und Umgebungslicht resultieren, zu einem zweiten Ausgangsanschluss (26) der Lateral-Driftfeld-Fotodiode (12), und
- einer Ansteuereinheit (28) zur wechselweisen Ansteuerung der beiden Transfer-Gate-Elektroden (16,18), wobei die Ansteuereinheit (28) einen Signalspeicher (30) zum Speichern eines Umgebungslichtsignals aufweist, das das von der strahlungsempfindlichen Fläche (11) der Lateral-Driftfeld-Fotodiode (12) empfangene Umgebungslicht repräsentiert,
- wobei die strahlungsempfindliche Fläche (11) der Lateral-Driftfeld-Fotodiode (12) in Pausenintervallen (P) ausschließlich Umgebungslicht und in Belichtungsintervallen (B) Umgebungslicht mit Nutzlicht aussetzbar ist,
- wobei durch eine synchron zu den Pausen- und Belichtungsintervallen (P,B) erfolgende Ansteuerung der beiden Transfer-Gate-Elektroden (16,18) am ersten Ausgangsanschluss (24) das Umgebungslichtsignal anliegt, das die Belichtung der strahlungsempfindlichen Fläche (11) der Lateral-Driftfeld-Fotodiode (12) durch ausschließlich Umgebungslicht repräsentiert, und am zweiten Ausgangsanschluss (26) ein Umgebungs- und Nutzlichtsignal anliegt, das die Belichtung der strahlungsempfindlichen Fläche (11) der Lateral-Driftfeld-Fotodiode (12) durch Umgebungslicht und Nutzlicht repräsentiert,
- wobei das in einem Pausenintervall (P) am ersten Ausgangsanschluss (24) anliegende Umgebungslichtsignal in dem Signalspeicher (30) gespeichert wird und
- wobei zwecks Erzeugung eines Signals, das das um das Umgebungslicht kompensierte Nutzlicht repräsentiert, das im Signalspeicher (30) gespeicherte Signal von dem im auf das Pausenintervall (P) folgende Belichtungsintervall (B) an dem zweiten Ausgangsanschluss (26) der Lateral-Driftfeld-Fotodiode (12) anliegende Umgebungs- und Nutzlichtsignal subtrahiert wird, **dadurch gekennzeichnet, dass** der Signalspeicher (30) als Stromspiegel (31) ausgeführt ist, der zwei Stromquellen (32,34) aufweist, welche mittels einer Sample-and-Hold-Schaltung (35) gekoppelt sind, wobei die eine Stromquelle (32) mit dem ersten Ausgangsanschluss (24) der Lateral-Driftfeld-Fotodiode (12) verbunden ist und die andere Stromquelle (34) über einen Subtraktions-Schalter (36) mit dem zweiten Ausgangsanschluss (26) der Lateral-Driftfeld-Fotodiode (12) verbunden ist, wobei die Ansteuereinheit (28) den Subtraktions-Schalter (36) in einem Pausenintervall (P) öffnet und in einem Belichtungsintervall (B) schließt.

2. Vorrichtung nach Anspruch 1, **gekennzeichnet durch** eine Ausleseschaltung (38), der das erzeugte Signal, das das um das Umgebungslicht kompensierte Nutzlicht repräsentiert, zugeführt wird.

3. Vorrichtung nach Anspruch 1 oder 2, **dadurch gekennzeichnet, dass** die Sample-and-Hold-Schaltung (35) einen Speicherschalter (44) und eine Speicherkapazität (45,50,53) aufweist und dass die Ansteuereinheit (28) den Speicherschalter (44) in einem Pausenintervall (P) zum Aufladen mit einer das Umgebungslicht repräsentierenden Ladung schließt und in einem Belichtungsintervall (B) zum Erzeugen des das Umgebungslicht repräsentierende Umgebungslichtsignals öffnet.

4. Vorrichtung nach einem der Ansprüche 1 bis 3, **dadurch gekennzeichnet, dass** die beiden Stromquellen (32,34) jeweils von einem PMOS-Transistor (46,48) gebildet sind.

5. Vorrichtung nach Ansprüchen 3 und 4 **dadurch gekennzeichnet, dass** die Speicherkapazität (50) von dem PMOS-Transistor (48) der mit dem zweiten Ausgangsanschluss (26) der Lateral-Driftfeld-Fotodiode (12) verbundenen Stromquelle (34) gebildet ist.

6. Vorrichtung nach Anspruch 5, **dadurch gekennzeichnet, dass** der Signalspeicher (30) von einem PMOS-Transistor (52) mit Speicherkapazität (53) gebildet ist, wobei der PMOS-Transistor (52) von der Ansteuereinheit (28) in einem Pausenintervall (P) als Diode zum Aufladen der Speicherkapazität (53) durch das Umgebungslicht repräsentierende Ladung und in einem Belichtungsintervall (B) als Stromquelle zur Lieferung eines die Ladung der Speicherkapazität (53) repräsentierenden Signals angesteuert wird.

## Claims

1. Ambient light compensation device for an optical sensor exposed to useful light and ambient light, comprising
- a lateral drift field photodiode (12) comprising a radiation-sensitive surface (11) on a charge generation area (10), including a dopant, of a semiconductor substrate in which charge carriers are formed upon exposure,
- wherein the lateral drift field photodiode (12) is provided with a first transfer gate electrode (16) for discharge of charge carriers from the charge generation area (10) that result from exposure of the radiation-sensitive surface (11) exclusively by ambient light, to a first output connection (24) of the lateral drift field photodiode (12), and with a second transfer gate electrode (18) for discharge of charge carriers from the charge generation area (10) that result from exposure of the radiation-sensitive surface (11) by useful light and ambient light, to a second output connection (26) of the lateral drift field photodiode (12), and
- a control unit (28) for alternate control of the two transfer gate electrodes (16,18), wherein the control unit (28) comprises a signal store (30) for storage of an ambient light signal representing the ambient light received by the radiation-sensitive surface (11) of the lateral drift field photodiode (12),
- wherein the radiation-sensitive surface (11) of the lateral drift field photodiode (12) is adapted to be exposed, in pause intervals (P), exclusively to ambient light (B) and, in illumination intervals, to both ambient light and useful light,
- wherein, by control of the two transfer gate electrodes (16,18) in synchronism with the pause and light-exposure intervals (P,B), the first output connection (24) has applied to it the ambient light signal representing the exposure of the radiation-sensitive surface (11) of the lateral drift field photodiode (12) exclusively by ambient light, and the second output connection (26) has applied to it an ambient and useful light signal representing the exposure of the radiation-sensitive surface (11) of the lateral drift field photodiode (12) by ambient light and useful light,
- wherein the ambient light signal applied to the first output connection (24) in a pause interval (P) is stored in the signal store (30), and
- wherein, for generating a signal which represents the useful light compensated for the ambient light, the signal stored in the signal store (30) is subtracted from the ambient light and useful light signal which is applied to the second output connection (26) of the lateral drift field photodiode (12) in the light-exposure interval (B) following the pause interval (P),
**characterized in that** the signal store (30) is configured as a current mirror (31) which comprises two current sources (32,34) that are coupled by a sample and hold circuit (35), wherein one current source (32) is connected to the first output connection (24) of the lateral drift field photodiode (12) and the other current source (34) is connected, via a subtraction switch (36), to the second output connection (26) of the lateral drift field photodiode (12), wherein the control unit (28) is operative to open the subtraction switch (36) in a pause interval (P) and to close it in a light-exposure interval (B).

2. Device according to claim 1, **characterized by** a readout circuit (38) to which is supplied the generated signal representing the useful light compensated for the ambient light.

3. Device according to claim 1 or 2, **characterized in that** the sample and hold circuit (35) comprises a store switch (44) and a store capacity (45,50,53) and that the control unit (28) is operative to close the store switch (44) in a pause interval (P) for charging with a charge representing the ambient light, and to open the store switch (44) in a light-exposure interval (B) for generating the ambient light signal representing the ambient light.

4. Device according to any one of claims 1 to 3, **characterized in that** the two current sources (32,34) are each formed by a PMOS transistor (46,48).

5. Device according to claim 3 and 4, **characterized in that** the store capacity (50) is formed by the PMOS transistor (48) of the current source (34) connected to the second output connection (26) of the lateral drift field photodiode (12).

6. Device according to claim 5, **characterized in that** the signal store (30) is formed by a PMOS transistor (52) having a store capacity (53), wherein, by means of the control unit (28), the PMOS transistor (52) is controlled, in a pause interval (P), as a diode for charging the store capacity (53) with a charge representing the ambient light, and in a light-exposure interval (B), as a current source for supplying a signal representing the charge of the store capacity (53).

## Revendications

1. Dispositif de compensation de lumière ambiante destiné à un capteur optique exposé de la même manière à la lumière ambiante et à la lumière utile, ledit dispositif comprenant
- une photodiode à champ de dérive latéral (12) possédant une surface (11) sensible au rayonnement sur une région de génération de charges (10) d'un substrat semi-conducteur, laquelle contient un dopant et dans laquelle des porteurs de charges se forment lors de l'exposition,
- la photodiode à champ de dérive latéral (12) étant pourvue d'une première électrode de grille de transfert (16) destinées à évacuer des porteurs de charges de la région de génération de charges (10), résultant d'une exposition de la surface (11) sensible au rayonnement exclusivement à la lumière ambiante, vers une première borne de sortie (24) de la photodiode à champ de dérive latéral (12) et une deuxième électrode de grille de transfert (18) destinée à évacuer des porteurs de charges de la région de génération de charges (10), résultant d'une exposition de la surface (11) sensible au rayonnement à une lumière ambiante et une lumière utile, vers une deuxième borne de sortie (26) de la photodiode à champ de dérive latéral (12), et
- une unité de commande (28) destinée à commander alternativement les deux électrodes de grille de transfert (16, 18), l'unité de commande (28) comportant une mémoire de signal (30) destinée à stocker un signal de lumière ambiante représentant la lumière ambiante reçue par la surface (11) sensible au rayonnement de la photodiode à champ de dérive latéral (12),
- la surface (11) sensible à un rayonnement de la photodiode à champ de dérive latéral (12) pouvant être exposée, à des intervalles de pause (P), exclusivement à la lumière ambiante et, à des intervalles d'exposition (B), à la lumière ambiante avec une lumière utile,
- le signal de lumière ambiante étant appliqué à la première borne de sortie (24) au moyen d'une commande des deux électrodes de grille de transfert (16, 18) en synchronisme avec les intervalles de pause et d'exposition (P, B), lequel représente l'exposition de la surface (11) sensible au rayonnement de la photodiode à champ de dérive latéral (12) exclusivement à la lumière ambiante et un signal de lumière ambiante et de lumière utile étant appliqué à la deuxième borne de sortie (26), lequel représente l'exposition de la surface (11) sensiblement au rayonnement de la photodiode à champ de dérive latéral (12) à la lumière ambiante et la lumière utile,
- le signal de lumière ambiante appliqué à la première borne de sortie (24) dans un intervalle de pause (P) étant mémorisé dans la mémoire de signal (30) et,
- pour générer un signal représentant la lumière utile compensée de la lumière ambiante, le signal mémorisé dans la mémoire de signal (30) étant soustrait du signal de lumière ambiante et de lumière utile appliqué à la deuxième borne de sortie (26) de la photodiode à champ de dérive latéral (12) dans l'intervalle d'exposition (B) suivant l'intervalle de pause (P),
**caractérisé en ce que** la mémoire de signal (30) est conçue comme un miroir de courant (31) comportant deux sources de courant (32, 34) qui sont couplées au moyen d'un circuit d'échantillonage et de maintien (35), l'une (32) des sources de courant étant reliée à la première borne de sortie (24) de la photodiode à champ de dérive latéral (12) et l'autre source de courant (34) étant reliée à la deuxième borne de sortie (26) de la photodiode à champ de dérive latéral (12) par le biais d'un interrupteur de soustraction (36), l'unité de commande (28) ouvrant l'interrupteur de soustraction (36) dans un intervalle de pause (P) et le fermant dans un intervalle d'exposition (B).

2. Dispositif selon la revendication 1, **caractérisé par** un circuit de lecture (38) auquel est amené un signal généré représentant la lumière utile compensée de la lumière ambiante.

3. Dispositif selon la revendication 1 ou 2, **caractérisé en ce que** le circuit d'échantillonnage et de maintien (35) comporte un interrupteur de mémoire (44) et une capacité de mémoire (45, 50, 53) et **en ce que** l'unité de commande (28) ferme l'interrupteur de mémoire (44) dans un intervalle de pause (P) pour charger une charge représentant la lumière ambiante et l'ouvrant dans un intervalle d'exposition (B) pour générer le signal de lumière ambiante représentant la lumière ambiante.

4. Dispositif selon l'une des revendications 1 à 3, **caractérisé en ce que** les deux sources de courant (32, 34) sont chacune formées par un transistor PMOS (46, 48).

5. Dispositif selon les revendications 3 et 4, **caractérisé en ce que** la capacité de mémoire (50) est formée par le transistor PMOS (48) de la source de courant (34) reliée à la deuxième borne de sortie (26) de la photodiode à champ de dérive latéral (12).

6. Dispositif selon la revendication 5, **caractérisé en ce que** la mémoire de signal (30) est formée par un transistor PMOS (52) ayant une capacité de mémoire (53), le transistor PMOS (52) étant commandé par l'unité de commande (28) servant dans un intervalle de pause (P) de diode pour charger la capacité de mémoire (53) avec la charge représentant la lumière ambiante et dans un intervalle d'exposition (B) de source de courant pour délivrer un signal représentant la charge de la capacité de mémoire (53).
